# EUROPEAN PATENT SPECIFICATION

(11) **EP 0 448 012 B1**
(45) Date of publication and mention of the grant of the patent: **13.09.1995**
(21) Application number: 91104139.0
(22) Date of filing: 18.03.1991
(51) Int. Cl.: G02B 6/44, G02B 6/38, G02B 6/00

(54) **Joint for optical cables and cable cores and method of making the same**
Verbindung für optische Kabel und Kabelseele mit zugehörigem Herstellungsverfahren
Connecteur pour câble optique et âme du câble et procédé de sa fabrication

(30) Priority: 20.03.1990 IT 1972090
(43) Date of publication of application: 25.09.1991
(73) Proprietor: PIRELLI CAVI S.p.A., 20126 Milano (IT)
(72) Inventor: Lepri, Luciano, Rho Milano (IT); Ginocchio, Alessandro, Sesto S. Giovanni MI (IT)
(74) Representative: Giannesi, Pier Giovanni

(56) References cited:
- EP-A- 0 242 740
- GB-A- 2 169 093

## Description

The present invention relates to joints designed to connect optical cables and optical cable cores of the type in which said cores include a cylindrical section member provided, on the outer surface thereof, with at least a groove extending in the form of a closed helix along said surface and within which at least an optical fiber is loosely accommodated. The present invention also relates to the method of making the above joints.

It is known that optical cables in which the core comprises a cylindrical section member provided on the outer surface thereof with grooves extending in the form of a helix along said surface are divided into two groups.

The first group comprises cables in which the grooves present on the outer surface of the cylindrical section member extend in the form of a closed helix whereas the other group comprises cables having grooves in the form of an open helix.

By the term "closed helix" it is herein intended that all coils of the helix are oriented in the same way and all have a S-shaped or Z-shaped configuration; on the contrary, by the term "open helix" it is herein intended that adjacent coils in the helix extend in the two ways and therefore that the helix is formed with S-shaped coils and Z-shaped coils that are disposed alternately with each other.

It is known that, the diametrical sizes of the core being equal and the pitch, shape and sizes of the grooves being equal too, the cables in which said grooves have an extension in the form of a closed helix enable a greater richness of the optical fibers in said grooves as compared with the cables in which the grooves have an extension in the form of an open helix. The reason for that will be explained hereinafter.

The maximum permissible richness of an optical fiber in a helix-shaped groove is directly proportional to the difference between the line length, defined by the intersection of the radial groove plane with the surface closing said groove to the outside (herein also referred to as line of maximum groove extension) and the length of the bottom line of the groove itself.

In an open-helix groove there is a number of portions in which the bottom line thereof and the line of the maximum groove extension are parallel to the cable axis and this occurs at the junction portions between each S-shaped coil and each Z-shaped coil.

In these junction portions the length of the bottom line of the groove is equal to the length of the maximum extension line in said groove.

On the contrary, in a closed-helix groove where the coils are oriented in the same way there is no portion in which the optical fiber axis, the bottom line of the groove and the maximum extension line of the groove are parallel to the cable axis and therefore at all positions the maximum extension line of the groove is always longer than the bottom line of the same.

As a result, the difference in length between the maximum extension line and the bottom line in an open-helix groove is shorter than the difference that can be found in a closed-helix groove and therefore in the latter the maximum permissible richness that can be given to an optical fiber is unavoidably greater than that present in the open-helix grooves.

This advantage residing in the greater richness permitted to the optical fibers of cables having a core provided with closed-helix grooves in which the optical fibers are loosely housed, as compared with cables of the same type in which however the grooves for loosely housing the optical fibers have an open-helix configuration is practically reduced to zero due to the important drawback consisting in the impossibility of executing diameter joints therein (that is joints in which the diametrical outer sizes are the same as the diametrical outer sizes of the cables) without running the risk of damaging the optical fibers and by adopting the usual butt welding techniques between the optical cable fibers so as to practically recreate the same structure as in the core also in the joint area, for example as disclosed in the solution described in the Italian Patent Application No. 20 079 in the name of the same applicant.

In fact, as stated in the above Italian Patent Application, by interposing a cylindrical body provided with the same grooves as those of the cable cores to be united and that therefore in the case of cables having a core provided with closed-helix grooves necessarily has closed-helix grooves oriented in the same way as those of the cable cores, it is impossible, once the junctions between the end portions of the optical cable fibers have been carried out, to introduce said junction portion into the grooves of the cylindrical body connecting said cable cores without exceeding the maximum richness value permissible to an optical fiber (the respect of which ensures the absence of risks of microbendings in the optical fibers) in the groove accommodating it.

This is due to the fact that by using a portion in the joint area provided with closed-helix grooves like those of the cable core, the portion of optical fibers designed to carry out the continuity between the optical fibers in the joint must be first of all necessarily arranged in the form of a closed helix about the axis of the joint and secondly said portion must be of greater length than that of the maximum extension line of the groove in order to enable the welding devices to carry out the welding between the optical cable fibers, taking into account the important bulkiness of said devices.

For the above reason in the case of joints between optical cables of the type in which the cores have the grooves designed to receive the optical fibers in the form of a closed helix, complicated structures of joints are described like the one disclosed in the Japanese Patent Application No. 55-95917.

The use of complicated structures for joints of optical cables the cores of which are provided with closed-helix grooves gives rise to important troubles during the laying of these cables above all when they are used in a submarine environment; this is due to the important radial bulkiness of the joints present therein which involves difficulties in passing through the pulleys of the devices designed to carry out the laying.

The present invention aims at solving the problem of producing diameter joints in optical cables of the type having a core provided with closed-helix grooves for accommodating the optical fibers without the necessity of resorting to complicated structures and workings for said joints.

It is therefore an object of the present invention a joint connecting optical fibre cables and/or optical fibre cable cores of the type comprising a cylindrical member provided with grooves and/or cavities extending therealong in the form of a closed helix that is, a helix whose spirals all have the same orientation, namely, a S-shaped or a Z-shaped coil configuration, each groove accomodating at least one optical fiber, characterized in that a cylindrical body is interposed between the two cable cores said body being coaxial with said cores and being provided on its outer curved surface with open-helix grooves, an open helix being a helix in which S-shaped and Z-shaped coil configurations are disposed alternately with each other, each open helix groove on the cylindrical body extending between and providing a continuation of a corresponding pair of closed-helix grooves and/or cavities on the cylindrical members.

It is another object of the present invention a method of carrying out junctions in optical fiber cables and/or optical cable cores of the type comprising a cylindrical member provided with grooves and/or cavities extending in the form of a closed helix that is, a helix whose spirals all have the same orientation, namely a S-shaped or a Z-shaped coil configuration and in each groove at least one optical fiber is loosely housed, characterized in that it comprises the step of interposing a cylindrical body between the cable cores, said body being provided with open-helix grooves, an open helix being an helix in which S-shaped and Z-shaped coil configuration are disposed alternately with each other, said open helix grooves extending between the end faces of said cylindrical members and the steps of fastening and coaxially aligning said cylindrical body with the cable cores, said open-helix grooves on the cylindrical body each providing a continuation of a corresponding pair of closed-helix grooves and/or cavities of the cylindrical members, each open helix groove extending between the corresponding pair of grooves of the cable cores.

The present invention will be best understood from the following detailed description given by way of non-limiting example with reference to the accompanying drawings, in which:
- Fig. 1 is a perspective view of the joint of the invention,
- Fig. 2 is an exploded view of the joint of Fig. 1 showing the structure thereof.

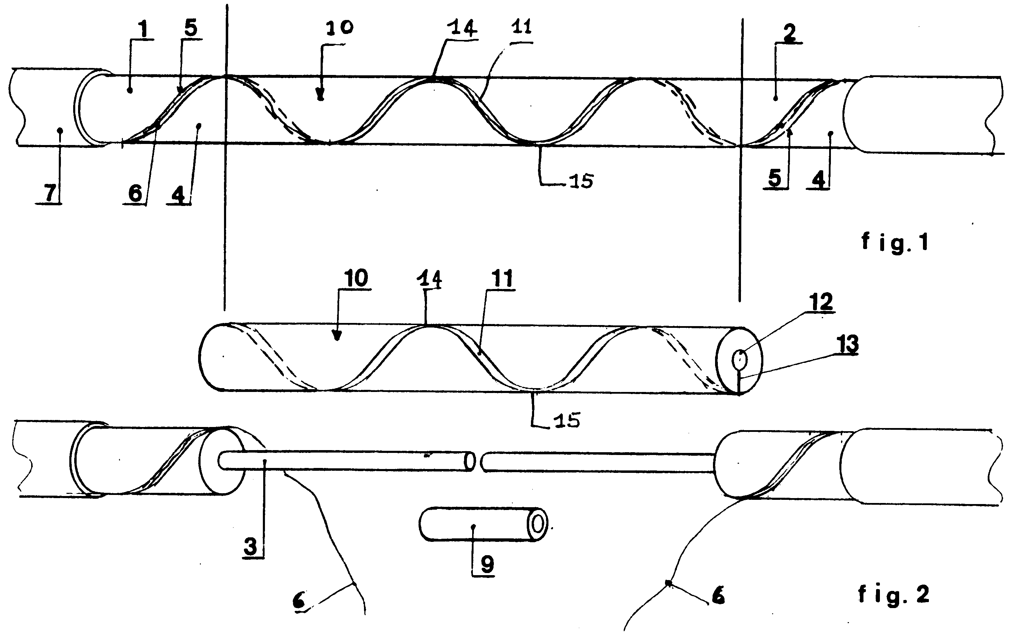

The joint shown in Figs. 1 and 2 connects two optical fiber cables 1 and 2 having the same structure and size, to each other.

The structure of the particular cables herein shown which is not to be intended in a limiting sense in the present invention is as follows.

In the radially innermost area of cables 1 and 2 there is an element mechanically resisting at least to stresses applied to the cables during their manufacture and consisting of metallic cords or wires 3 for example.

Alternatively the cord 3 may consist of spun yarns such as for example aliphatic or aromatic polyamide resins or fiber glass or can be a fiberglass-reinforced plastic rod.

A cylindrical section member 4 made of plastic material such as for example a polyolefin or the like is present about the metallic cord 3.

According to an alternative embodiment not shown the cylindrical section member 4 is made of a metallic material and in this case the mechanically resistant element is absent.

The cylindrical section member 4 constituting the core both of cable 1 and cable 2 has a groove 5 on its radially outermost surface which extends longitudinally to the core itself and has a closed-helix configuration for example according to a helix having S-shaped coils all of them oriented in the same way, as shown in the figures.

According to alternative embodiments not shown in the drawings, the groove 5 can have Z-shaped coils or in place of the grooves the cables can have fiber-housing cavities extending along the same according to a closed-helix configuration.

The groove 5 preferably has the same sizes and pitch in both cores of cables 1 and 2; for example said groove in a section normal to its axis has the form of an arc of a circle having a radius of 1 mm, a pitch of 70 mm and is formed on the radially outermost surface of a polyethylene section member having a cylindrical form in a section perpendicular to the axis of said section member, the section radius being of 3 mm.

Still by way of example only, the groove 4 can be of a substantially rectangular form in a section normal to its axis, having a width and depth of 1 mm and a rounded bottom of 0.5 mm of radius.

An optical fiber 6 is loosely accommodated in the grooves 5 of cores 4 in cables 1 and 2, although this must not be intended in a limiting sense since several optical fibers can also be housed in the same groove 5.

A tape 7 made of plastic material for example, is wound about the cylindrical section members 4 forming the cable 1 and 2 cores so as to give origin to a continuous layer about the cables which will also close grooves 5,

It a radially outer position relative to the tape windings 7 other layers of known type surrounding the optical fiber cables described in the present invention can be present, but they have not been shown as they do not form part of the present invention.

In particular, when the metallic cord 3 occupying the radially innermost position in cables 1 and 2 does not possess enough mechanical strength to resist the stresses applied during the cable laying, one of the layers disposed about the tape winding 7 is at least a mechanically resistant layer formed with metallic cords or tapes for example made of steel or steel alloys or of spun yarns such as aliphatic or aromatic polyamide resins and similar materials having a high mechanical strength.

In addition, in the case in which cables 1 and 2 are intended for use as submarine cables one of the radially outer layers relative to the tape winding 7 is a sealing sheath, for example a metallic sheath.

In the particular embodiment of a joint in accordance with the present invention shown in the figures the facing ends of cables 1 and 2 exhibit the respective components stepwise bare along a portion thereof. In particular the ends of both cables 1 and 2 exhibit bare portions in the metallic cords 3, the cylindrical section members 4 and the ends of the optical fibers 6 accommodated in the grooves 5 of said cylindrical section members 4.

In the joint shown in the figures the bare portions of the metallic cords 3 are mechanically butt joined by a clamp 9 or alternatively by a weld or similar elements capable of recreating a mechanical continuity between said metallic cords 3.

A cylindrical body 10, no matter how made but preferably of a plastic material such as a polyolefin, is located over the cord 3 junction area and the outer surface of said body is perfectly aligned with the outer surfaces of the cylindrical section members 4 in cables 1 and 2.

To the ends of the present invention the essential feature that the cylindrical body 10 must possess is the provision of at least an open-helix groove 11 on the revolution surface thereof, that is a groove formed with alternate S-shaped and Z-shaped portions connecting to each other the grooves 5 of the cylindrical section members 4 forming the cores of cables 1 and 2, so as to achieve the continuity between said cable grooves 5.

In particular the open-helix groove 11 has, at both ends of the cylindrical body 10, a helix extension oriented in the same way as the helix extension possessed by the grooves present in the cores of the cables joined to each other in the joint.

Said end portions of the groove 11, besides being oriented in the same way as the closed-helix grooves in the cable cores, preferably have the same pitch too.

The intermediate portion of groove 11 which is in the form of an open helix provides at least two helix inversions 14 and 15 and in general a helix-inversion number which is a multiple of two.

In addition the open-helix portion included between the two inversions can be of any number of half-pitches and even of a single helix half-pitch as shown in the figures.

The choice of the number of half-pitches in the open-helix groove comprised between at least two helix inversions depends on many factors, among which: the diametrical sizes of the grooved core, the shape, depth and pitch of the groove, the sizes of the tool used to carry out the butt welding of the optical fibers.

In spite of all the involved factors, a person skilled in the art is capable of selecting, in all pratical cases, the number of half-pitches enabling him to conveniently carry out the weldings between the optical fibers avoiding the maximum permissible richness of the optical fibers being exceeded in the open-helix groove designed to accommodate it.

In fact, once the person skilled in the art knows the bulkiness of the particular tool to be adopted for carrying out the welding between the optical fibers, he establishes the amount of the radial distance he wishes to have between the joint axis and the welding execution area of the optical fibers.

When the above distance is known, the length of the two end portions of the optical fibers disposed in cantilevered fashion from the cables is automatically determined by the fact that after the butt welding between the same has been carried out the resulting continuous portion of optical fiber disposed parallelly to the joint axis must have said distance as the maximum one.

The length of the continuous portion of optical fiber resulting after the butt welding between the ends of the optical cable fibers has been carried out in the respect of the above condition, must not be greater than the length of the maximum extension line of the open-helix groove of the joint body designed to receive it in order to avoid the maximum permissible richness of the optical fiber being exceeded in the groove.

Therefore the number of half-pitches of the open-helix groove portion comprised between the two helix inversions will be established so that the, length of the maximum extension line of the groove in said portion be not greater than the length of the continuous portion of optical fiber achieved with the butt welding of the end portions of the optical cable fibers.

Housed within the groove 11 are the end portions of the optical fibers 6 of the two cables 1 and 2 and the junction between the same usually consisting of a butt welding between the optical fibers in question.

The joint in accordance with the invention is obtained by a method also falling within the scope of the present invention which is described in the following.

After stepwise baring, in known manner, all components at the ends of the cables to be connected in the joint, first the mechanical connection of the metallic cords 3 of the cables is carried out by means of the clamp 9 for example.

When this operation is over, the essential step of the process takes place, that is the interposition of a cylindrical body 10 between the cylindrical section members 4 forming the cores of the two cables 1 and 2 and the fastening of said body thereto. Said cylindrical body has the same diameter as said cylindrical section members but it has grooves exhibiting an open-helix extension with end portions oriented in the same way as the closed-helix grooves of the cables to be joined and with a middle portion in which helix inversions in the number of two or a multiple of two are present.

In addition during the above essential step, in order to carry out a connection between the grooves 5 of the cylindrical section members 4 of the two cable cores, the groove 11 of the cylindrical body 10 is disposed so as to create a continuity.

The cylindrical body 10 can be made in any manner, for example by molding or extrusion so that, besides exhibiting at least an open-helix groove on the radially outer revolution surface thereof, it also has a cavity 12 in the region of its axis, capable of receiving the connection between the metallic cords 3 of the cables, and a radial slit 13 in its wall in order to enable the body 10 to be fitted on the bare ends mechanically connected to each other, of said metallic cords 3 in cables 1 and 2.

When the essential step of the process of the invention has been carried out, the end portions of the optical fibers belonging to the two cables and projecting in cantilevered fashion from the faced ends thereof are put in alignment with the axis of the cables and connected to each other by means of a butt welding.

When the optical fibers have been butt welded (or they have been connected by adopting other techniques such as for example a microconnector, provided that it may be loosely housed in the groove too), the optical fibers are laid down in the open-helix groove 11 of the cylindrical body 10.

The process is completed by the next step, known per se, of reforming the continuity of all components existing about the core of cables 1 and 2 and in particular of the winding tape 7.

From the above description relating to a preferred embodiment of a joint and to a method of making it, it can be clearly understood that all of the above listed intended purposes are achieved.

The interposition of a cylindrical body between the two cable cores provided with closed-helix grooves for loosely accommodating the optical fibers, which cylindrical body has the same outer diameter as that of said cores and is provided with open-helix grooves connecting the grooves of the cable cores, enables a continuity to be recreated between the cores of said cables without imposing any increase in diameter in the joint area.

In addition, since the open-helix configuration of the grooves enables the optical fibers to be housed therein without forcing the fibers to be previously wound about the axis of the body in which said grooves are formed, it is possible to carry out the connection between the end portions of the optical fibers after merely disposing them parallelly to the axis of the cables and lay them down in the open-helix grooves of the body interposed therebetween without exceeding the maximum richness permissible to the optical fibers in the grooves.

The interposition of a body provided with open-helix grooves between the cores of the cables exhibiting closed-helix grooves for accommodating the optical fibers not only enables diameter joints to be achieved, but also avoids the use of complicated and difficult structures for accomplishing junctions between optical fiber cables of the type in question.

Although a particular embodiment of the invention has been described, all modifications accessible to a person skilled in the art are intended to be included within the scope of the invention.

## Claims

1. A joint connecting optical fibre cables and/or optical fibre cable cores (4) of the type comprising a cylindrical member (4) provided with grooves and/or cavities (5) extending therealong in the form of a closed helix that is, a helix whose spirals all have the same orientation, namely a S-shaped or a Z-shaped coil configuration, each groove accomodating at least one optical fiber (6), characterized in that a cylindrical body (10) is interposed between the two cable cores (4) said body being coaxial with said cores and being provided on its outer curved surface with open-helix grooves (11), an open helix being a helix in which S-shaped and Z-shaped coil configurations are disposed alternately with each other, each open helix groove on the cylindrical body extending between and providing a continuation of a corresponding pair of closed-helix grooves and/or cavities (5) on the cylindrical members.

2. A joint according to claim 1, characterized in that the open-helix grooves (11) provided on the outer curved surface of the cylindrical body (10) describe, at the end portions thereof, a helical path oriented in the same way as that of the adjacent grooves and/or cavities present in said cylindrical members of the cables and, at the middle portion thereof, a helical path which contains a plurality of helix inversions that change the path shape from a S to a Z shape configuration or vice-versa depending upon the orientation of the adjacent spiral.

3. A method of carrying out junctions in optical fiber cables and/or optical cable cores (4) of the type comprising a cylindrical member (4) provided with grooves and/or cavities (5) extending in the form of a closed helix that is, a helix whose spirals all have a S-shaped or a Z-shaped coil configuration and in each groove at least one optical fiber (6) is loosely housed, characterized in that it comprises the step of interposing a cylindrical body (10) between the cable cores, said body being provided with open-helix grooves (11), an open helix being an helix in which S-shaped and Z-shaped coil configuration are disposed alternately with each other, said open helix grooves extending between the end faces of said cylindrical members and the steps of fastening and coaxially aligning said cylindrical body with the cable cores, said open-helix grooves on the cylindrical body each providing a continuation of a corresponding pair of closed-helix grooves and/or cavities (5) of the cylindrical members, each open helix groove extending between the corresponding pair of grooves of the cable cores (4).

## Patentansprüche

1. Verbindung für Lichtleiterkabel und/oder Lichtleiterkabelkerne (4) in der Bauweise mit einem zylindrischen Element (4), das mit Nuten und/oder Hohlräumen (5) versehen ist, die sich an ihm entlang in Form einer geschlossenen Helix erstrecken, d.h. einer Helix, deren Gänge alle die gleiche Ausrichtung haben, nämlich eine S-förmige oder eine Z-förmige Wendelanordnung, wobei jede Nut wenigstens einen Lichtleiter (6) aufnimmt, dadurch gekennzeichnet, daß zwischen die beiden Kabelkerne (4) ein zylindrischer Körper (10) eingesetzt ist, der koaxial zu den Kernen ist und an seiner gekrümmten Außenfläche mit Offenhelixnuten (11) versehen ist, wobei eine Offenhelix eine Helix ist, bei der S-förmige und Z-förmige Wendelanordnungen abwechselnd zueinander angeordnet sind, und jede Offenhelixnut an dem zylindrischen Körper sich zwischen einem entsprechenden Paar von Geschlossenhelixnuten und/oder Hohlräumen (5) an den zylindrischen Elementen erstreckt und eine Fortsetzung davon bildet.

2. Verbindung nach Anspruch 1, dadurch gekennzeichnet, daß die an der gekrümmten Außenfläche des zylindrischen Körpers (10) vorgesehenen Offenhelixnuten (11) an ihren Endabschnitten eine Schraubenbahn, die genauso ausgerichtet ist wie die der angrenzenden, in den zylindrischen Elementen der Kabel vorhandenen Nuten und/oder Hohlräume, und an ihrem Mittelabschnitt eine Schraubenbahn beschreiben, die eine Vielzahl von Helixinversionen enthält, welche die Bahnform von einer S- zu einer Z-Form oder umgekehrt abhängig von der Ausrichtung des angrenzenden Gangs ändern.

3. Verfahren zum Herstellen von Verbindungen in Lichtleiterkabeln und/oder Lichtleiterkabelkernen (4) in der Bauweise mit einem zylindrischen Element (4), das mit Nuten und/oder Hohlräumen (5) versehen ist, die sich in einer geschlossenen Helix erstrecken, d.h. einer Helix, deren Gänge alle eine S-förmige oder Z-förmige Wendelanordnung haben, wobei in jeder Nut wenigstens ein Lichtleiter (6) lose aufgenommen ist, dadurch gekennzeichnet, daß es den Schritt aufweist, zwischen den Kabelkernen eine zylindrischen Körper (10) anzuordnen, der mit Offenhelixnuten (11) versehen ist, wobei eine Offenhelix eine Helix ist, bei der S-förmige und Z-förmige Wendelanordnungen abwechselnd zueinander angeordnet sind und wobei sich die Offenhelixnuten zwischen den Stirnseiten der zylindrischen Elemente erstrecken, und die Schritte aufweist, den zylindrischen Körper festzulegen und ihn koaxial zu den Kabelkernen auszurichten, wobei die Offenhelixnuten an dem zylindrischen Körper jeweils eine Fortsetzung eines entsprechenden Paares von Geschlossenhelixnuten und/oder Hohlräumen (5) der zylindrischen Elemente bilden und wobei sich jede Offenhelixnut zwischen dem entsprechenden Paar von Nuten der Kabelkerne (4) erstreckt.

## Revendications

1. Connecteur reliant des câbles en fibres optiques et/ou des âmes (4) de câbles en fibres optiques, du type qui comprend un élément cylindrique (4) doté de rainures et/ou de cavités (5) s'étendant sur sa longueur sous forme d'une hélice fermée, c'est-à-dire d'une hélice dont les spires ont toutes la même orientation, à savoir une configuration d'enroulement en S ou en Z, chaque rainure recevant au moins une fibre optique (6),
caractérisé en ce qu'un corps cylindrique (10) est interposé entre les deux âmes de câble (4), ledit corps étant coaxial avec lesdites âmes et étant pourvu sur sa surface extérieure courbe de rainures (11) en hélice ouverte, une hélice ouverte étant une hélice dans laquelle des configuration d'enroulement en S et en Z sont disposées de manière alternée, chaque rainure en hélice ouverte qui se trouve sur le corps cylindrique s'étendant entre une paire correspondante de rainures et/ou de cavités (5) en hélice fermée se trouvant sur les éléments cylindriques auxquelles elles procurent un prolongement.

2. Connecteur selon la revendication 1, caractérisé en ce que les rainures (11) en hélice ouverte placées sur la surface extérieure courbe du corps cylindrique (10) décrivent, en leurs parties d'extrémité, un trajet hélicoïdal orienté de la même manière que celui des rainures et/ou cavités adjacentes se trouvant sur lesdits éléments cylindriques des câbles et, en leur partie médiane, un trajet hélicoïdal qui comprend une pluralité d'inversions d'hélice faisant passer la forme du trajet d'une configuration en S à une configuration en Z ou vice-versa en fonction de l'orientation de la spirale adjacente.

3. Procédé pour effectuer des raccords dans des câbles en fibres optiques et/ou des âmes (4) de câbles en fibres optiques, du type qui comprennent un élément cylindrique (4) doté de rainures et/ou de cavités (5) s'étendant sous la forme d'une hélice fermée, c'est-à-dire d'une hélice dont les spires ont toutes une configuration d'enroulement en S ou en Z, chaque rainure recevant de manière lâche au moins une fibre optique (6),
caractérisé en ce qu'il comprend l'étape consistant à interposer un corps cylindrique (10) entre les âmes de câble, ledit corps étant pourvu de rainures (11) en hélice ouverte, une hélice ouverte étant une hélice dans laquelle des configuration d'enroulement en S et en Z sont disposées de manière alternée, lesdites rainures en hélice ouverte s'étendant entre les faces d'extrémité desdits éléments cylindriques, et les étapes consistant à aligner coaxialement ledit corps cylindrique avec les âmes de câbles et à le fixer à celles-ci, lesdites rainures en hélice ouverte s'étendant sur le corps cylindrique procurant chacune un prolongement à une paire correspondante de rainures et/ou de cavités (5) en hélice fermée des éléments cylindriques, chaque rainure en hélice ouverte s'étendant entre la paire correspondante de rainures des âmes de câbles (4).
